# EUROPÄISCHE PATENTSCHRIFT

(11) **EP 2 505 972 B1**
(45) Veröffentlichungstag und Bekanntmachung des Hinweises auf die Patenterteilung: **24.04.2013**
(21) Anmeldenummer: 11165486.9
(22) Anmeldetag: 10.05.2011
(51) Int. Cl.: G01J 3/02, G01J 3/50

(54) **Handfarbmessgerät**
Hand-held colour measurement device
Colorimètre manuel

(30) Priorität: 01.04.2011 US 201113078362
(43) Veröffentlichungstag der Anmeldung: 03.10.2012
(73) Patentinhaber: X-Rite Europe GmbH, 8105 Regensdorf (CH)
(72) Erfinder: Hastings, Zachary, Lowell, MA 01854 (US); Vordenberg, Steven, Amherst, NH 03031 (US); Masia, Andrew, Newburyport, MA 01950 (US); Dupuis, Daniel, Concord, NH 03301 (US); Kessler, Marco, 5607 Hägglingen (CH); Frick, Beat, 8107 Buchs (CH)
(74) Vertreter: Schwabe - Sandmair - Marx

(56) Entgegenhaltungen:
- EP-A1- 1 067 369
- EP-A1- 2 270 450
- EP-A2- 1 519 167
- US-A1- 2005 242 191

## Beschreibung

Die Erfindung betrifft ein Handfarbmessgerät gemäss dem Oberbegriff des unabhängigen Anspruchs 1.

Handfarbmessgeräte der gattungsgemässen Art sind in zahlreichen Ausführungsvarianten auf dem Markt. Solche Handfarbmessgeräte können auf beliebigen Messtechnologien basieren. Sie können z.B. als Filter- oder als Spektralmessgeräte ausgebildet sein, wobei letztere am universellsten sind, da aus Spektralmesswerten bekanntlich alle anderen in der Praxis interessierenden Grössen (z.B. Farbwerte, Farbdichtewerte etc.) ableitbar sind. Handfarbmessgeräte können ferner als autonome Geräte oder als Messperipherie zum Einsatz in Verbindung mit einem steuernden und Messdaten auswertenden Rechner ausgebildet sein. Autonome Handfarbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Handfarbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Handfarbmessgeräte oft z.B. mit einer sog. USB-Schnittstelle (Universal Serial Bus) ausgerüstet, über welche in vielen Fällen gleichzeitig auch die Stromversorgung (vom angeschlossenen Rechner aus) erfolgen kann. Ein solches Messgerätekonzept ist z.B. in US-PS Nr. 7 671 991 (≈ EP 1 845 350 B1) beschrieben.

Handfarbmessgeräte der gattungsgemässen Art sind je nach Ausbildung und Zubehör für viele Messaufgaben einsetzbar. Ein spezielles Einsatzgebiet solcher Handfarbmessgeräte ist die Messung an Monitoren, speziell zum Zwecke der Kalibration und zur Erstellung von Farbprofilen. Das Handfarbmessgerät wird dabei manuell an dem zu messenden Monitor positioniert, wobei es den Monitor berührt oder in einem kleinen Abstand (vorzugsweise weniger als 20cm) vom Monitor angeordnet ist. Ferner können Handfarbmessgeräte in weiteren Anwendungsfunktionen auch zur Messung des Umgebungslichts oder ev. auch für (Fern-)Messungen an einer Projektionsfläche verwendet werden, welche z.B. von einem elektronischen Projektor (Beamer) beleuchtet wird. Diese Punkte sind ebenfalls z.B. in US-PS Nr. 7 671 991 (≈ EP 1 845 350 B1) beschrieben.

Weitere Handfarbmessgeräte, die sowhol zum Messen an Monitoren als auch von Umgebungslicht dienen, sind in EP 1510167 A2 und EP 1067369 A1 beschrieben.

Durch die vorliegende Erfindung soll nun ein Handfarbmessgerät der gattungsgemässen Art dahingehend verbessert werden, dass es konstruktiv einfacher und leichter als die bekannten Geräte dieser Art ist und dabei trotzdem ohne separates Zubehör für verschiedene Messaufgaben, insbesondere die Messung an Monitoren, Projektionsflächen und von Umgebungslicht einsetzbar ist.

Diese der Erfindung zugrundeliegende Aufgabe wird durch das durch die Merkmale des unabhängigen Anspruchs 1 gekennzeichnete erfindungsgemässe Handfarbmessgerät gelöst. Vorteilhafte Ausgestaltungen und Weiterbildungen des erfindungsgemässen Handfarbmessgeräts sind Gegenstand der abhängigen Ansprüche.

Das Wesen der Erfindung besteht in Folgendem: Ein Handfarbmessgerät umfasst ein Gehäuse, in dem sich eine opto-elektronische Messeinheit befindet, welche von einem Messobjekt ausgehendes Messlicht durch ein Messfenster in einer Vorderwand des Gehäuses empfängt, in entsprechende elektrische Messsignale umwandelt, diese Messsignale zu die Farbe des Messobjekts charakterisierenden digitalen Messdaten verarbeitet und über eine Kommunikationsschnittstelle zur Verfügung stellt. Am Gehäuse ist ein im Wesentlichen U-förmiger Bügel mit zwei im Wesentlichen parallelen Seitenarmen und einem diese verbindenden und mit einem optischen Diffusor versehenen Mittelteil angeordnet. Die beiden Seitenarme sind an gegenüberliegenden Wänden des Gehäuses so drehbar gelagert, dass der Bügel von einer Monitorposition um im Wesentlichen 180° in eine Umgebungslichtposition und weiter oder zurück in die Monitorposition schwenkbar ist, wobei in der Umgebungslichtposition des Bügels der in dessen Mittelteil angeordnete Diffusor vor dem Messfenster in der Vorderwand des Gehäuses liegt und in der Monitorposition des Bügels sich der Diffusor an einer der Vorderwand gegenüberliegenden Hinterwand des Gehäuses befindet. Am Gehäuse und an den beiden Seitenarmen des Bügels sind mit einander zusammenwirkende Haltemittel vorgesehen, welche den Bügel in seiner Monitorposition bzw. seiner Umgebungslichtposition lösbar festhalten.

Gemäss einer vorteilhaften Ausführungsform sind am Gehäuse und an mindestens einem Seitenarm des Bügels mit einander zusammenwirkende Bremsmittel vorgesehen, welche der Schwenkbewegung des Bügels relativ zum Gehäuse einen definierten Schwenkwiderstand entgegensetzen, so dass der Bügel in jeder Schwenkposition festgehalten wird und sich nicht unkontrolliert verstellt.

Gemäss einer weiteren vorteilhaften Ausbildung ist der Mittelteil des Bügels als Standfläche ausgebildet und bildet der Bügel einen integrierten Gerätestandfuss, an dem das Gehäuse in einer im Wesentlichen vertikalen Ebene schwenkbar gelagert ist. Diese Ausgestaltung ist besonders für Messungen an Projektionsflächen von Vorteil.

Vorteilhafterweise ist der Bügel am Gehäuse zusätzlich (geringfügig) parallel zur Längsrichtung seiner Seitenarme beweglich gelagert. Dadurch lässt sich der Mittelteil des Bügels in der Monitorposition und in der Umgebungslichtposition näher an der Hinterwand bzw. die Vorderwand des Gehäuses positionieren. Dabei ist der Bügel vorteilhafterweise so am Gehäuse beweglich gelagert und geführt, dass bei der Schwenkbewegung des Bügels aus seiner Monitorposition heraus sein Mittelteil gleichzeitig auch vorübergehend von der Hinterwand des Gehäuses abgehoben wird und dass bei der Schwenkbewegung des Bügels in die Monitorposition sein Mittelteil gleichzeitig auch auf die Hinterwand des Gehäuses zu bewegt wird. Weiters ist es dabei vorteilhaft, wenn der Bügel so am Gehäuse beweglich gelagert und geführt ist, dass er in einer Schwenkstellung, bei der sich der in seinem Mittelteil angeordnete Diffusor vor dem Messfenster in der Vorderwand des Gehäuses befindet, in Längsrichtung seiner Seitenarme auf die Vorderwand des Gehäuses zu in die Umgebungslichtposition bewegbar ist und dann in der Umgebungslichtposition durch die Haltemittel festgehalten wird, und dass der Bügel entgegen der Festhaltekraft der Haltemittel aus seiner Umgebungslichtposition heraus in Längsrichtung seiner beiden Seitenarme von der Vorderwand des Gehäuses weg bewegbar ist. Vorzugsweise sind dazu am Gehäuse Führungskulissen und an den Seitenarmen des Bügels in die Führungskulissen eingreifende Kulissenfolgeglieder vorgesehen.

Weiters ist es vorteilhaft, wenn ein Positionssensor zur Erfassung mindestens der Umgebungslichtposition des Bügels vorgesehen ist.

Gemäss einer bevorzugten Ausbildungsform weist das Handfarbmessgerät ein an die Kommunikationsschnittstelle angeschlossenes Kabel auf, das durch einen der beiden Seitenarme des Bügels im Wesentlichen im Bereich von dessen Schwenkachse aus dem Gehäuse herausgeführt ist.

Dabei ist es vorteilhaft, wenn das Handfarbmessgerät gewichtsmässig so ausbalanciert ist, dass, wenn das Farbmessgerät frei am Kabel aufgehängt ist und sich der Bügel in seiner Monitorposition befindet, die Vorderwand des Gehäuses in Richtung auf das Kabel zu um einen kleinen Neigungswinkel zur Vertikalen geneigt ist. Vorteilhafterweise beträgt der Neigungswinkel maximal etwa 10°, vorzugsweise etwa 1°-2°, speziell etwa 1.4°. Diese Neigung des Geräts im am Kabel aufgehängten Zustand bewirkt, dass das Gehäuse bei Messungen an einem Monitor in weiten Grenzen unabhängig von dessen Neigung zur Vertikalen stets bündig an der Monitoroberfläche anliegt.

Zur bequemen Positionierung des Farbmessgeräts an einem Monitor ist das Kabel vorteilhafterweise mit einem in Längsrichtung vorzugsweise verstellbar an ihm gelagerten Gewichtskörper versehen, welcher das Gewicht des Farbmessgeräts im Wesentlichen ausgleicht.

Gemäss einer vorteilhaften Ausführungsform ist die Hinterwand des Gehäuses als Standfläche ausgebildet und/oder mit einem Verbindungsteil, insbesondere einer Gewindebuchse für ein Stativ versehen.

Ferner ist es vorteilhaft, wenn einer der beiden Seitenarme des Bügels als Standfläche für das Farbmessgerät ausgebildet ist. Alternativ oder zusätzlich kann einer der beiden Seitenarme auch mit einem Verbindungsteil, insbesondere einer Gewindebuchse zur Befestigung an einem Stativ versehen sein.

Gemäss einer besonders vorteilhaften Ausführungsform besteht die eine optische Achse aufweisende opto-elektronische Messeinheit aus einer im Bereich des Messfensters angeordneten konvexen, vorzugsweise asphärischen Eingangslinse mit einem verhältnismässig grossen Durchmesser, einer Blende zur Begrenzung des Einfallswinkelbereichs auf +/- 2°-10°, einem depolarisierend wirkenden optischen Diffusor, einer Sensor-Linse mit einem gegenüber der Eingangslinse typischerweise kleineren Durchmesser und mindestens drei durch Farbfilter auf unterschiedliche Spektralbereiche sensibilisierten photoelektrischen Sensoren, wobei die Blende im Wesentlichen in der Brennebene der Eingangslinse liegt, der optische Diffusor im Strahlengang in unmittelbarer Nähe der Blende und im Wesentlichen in der Brennebene der Sensor-Linse angeordnet ist, wobei die Filter und die Sensoren nahe der optischen Achse angeordnet sind und mit im Wesentlichen parallelem Messlicht beaufschlagt werden und wobei die Filter, die Sensoren und der Diffusor so ausgelegt sind, dass die von den Sensoren erzeugten elektrischen Messsignale im Wesentlichen die Tristimulus-Farbwerte XYZ nach CIE oder eine Linearkombination dieser Tristimulus-Farbwerte XYZ darstellen. Die spektralen Sensitivitäten der Farbkanäle, resultierend aus den Filterspektren, den spektralen Sensitivitäten der verwendeten Sensoren und der spektralen Transmission von allen weiteren Optikkomponenten, d.h. von den Linsen und dem Diffusor, sind im Wesentlichen auf die spektralen Charakteristiken für die Tristimulus-Farbwerte XYZ nach CIE ausgelegt, so dass die von den Sensoren erzeugten elektrischen Messsignale im Wesentlichen Tristimulus-Farbwerte XYZ nach CIE darstellen. Die einzelnen Farbkanäle bzw. spektralen Empfindlichkeiten können anstatt der XYZ Charakteristika auch eine Linearkombination derselben haben.

Vorteilhafterweise sind die Sensoren in einem Abstand von der Sensor-Linse angeordnet, welcher im Wesentlichen der Brennweite der Sensor-Linse entspricht.

Weiters ist es vorteilhaft, wenn die Blende den Einfallswinkelbereich auf +/- 4°-6° begrenzt.

Vorzugsweise ist zusätzlich zu den drei Sensoren ein vierter Sensor ohne vorgeschalteten Farbfilter vorgesehen.

Der optische Diffusor besteht vorteilhafterweise aus einem molekular streuenden Material mit vielen Streuzentren mit sehr kleinem Streuwinkel, insbesondere Polyoxymethylen. Vorteilhafterweise ist der optische Diffusor als dünnes Plättchen mit einer Plättchendichte von 0.3-0.5 mm, insbesondere rund 0.4 mm ausgebildet. Der optische Diffusor hat vorteilhafterweise eine Transluzenz von mindestens 25%, vorzugsweise mindestens 50%. Ferner ist es vorteilhaft, wenn der optische Diffusor das ihn durchsetzende Licht zu mindestens 95%, vorzugsweise mindestens 99% depolarisiert.

Vorzugsweise weist die Eingangslinse eine Brennweite von 20-30 mm, insbesondere 24-26 mm auf.

Die Eingangslinse ist mit Vorteil darauf optimiert, paralleles Licht auf einen Punkt abzubilden, und die Sensor-Linse ist mit Vorteil darauf optimiert, vom Diffusor divergierend abgestrahltes Licht nach Unendlich abzubilden.

Vorzugsweise weist die Blende einen Öffnungsdurchmesser von 3-5 mm, insbesondere rund 4 mm auf.

Vorteilhafterweise sind die Farbfilter als Transmissionsfilter mit dielektrischem Schichtaufbau ausgebildet. Vorzugsweise sind die Farbfilter in einem Einsatz bzw. Filterhalter positioniert und fixiert, welcher die Farbfilter und die Sensoren gegenseitig abschottet und vor Fremdlichtbeaufschlagung sowie gegenseitigem Streulicht schützt.

Im Folgenden wird die Erfindung anhand eines in der Zeichnung dargestellten Ausführungsbeispiels näher erläutert. Es zeigen:
- Fig. 1: ein erfindungsgemässes Handfarbmessgeräts in Schrägansicht, wobei sich der Bügel in Umgebungslichtposition befindet,
- Fig. 2: das Handfarbmessgerät der Fig. 1 in Schrägansicht, wobei der Bügel eine Schwenkstellung zwischen der Umgebungslichtposition und der Monitorposition einnimmt,
- Fig. 3: einen Axialschnitt durch das Handfarbmessgerät der Fig. 1 mit dem Bügel in Umgebungslichtposition,
- Fig. 4: einen Axialschnitt durch das Handfarbmessgerät der Fig. 1 mit dem Bügel in Monitorposition,
- Fig. 5a,b: zwei Schnitte durch das Handfarbmessgerät nach der Linie V-V der Fig. 3 in zwei unterschiedlichen Positionen des Bügels,
- Fig. 6a,b: zwei Schnittansichten analog Fig. 5a und 5b, jedoch mit zwei anderen Schwenkpositionen des Bügels,
- Fig. 7: eine teilweise geschnittene Ansicht des Bügels im Wesentlichen nach der Linie VII-VII der Fig. 4,
- Fig. 8: einen Schnitt nach der Linie VIII-VIII der Fig. 7,
- Fig. 9: eine Seitenansicht des Handfarbmessgeräts in an seinem Kabel aufgehängtem Zustand,
- Fig. 10: das Handfarbmessgerät am praktischen Einsatz bei der Messung an einem Monitor und
- Fig. 11: eine schematische Darstellung der opto-elektronischen Messeinheit des Handfarbmessgeräts.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Unter Messobjekt werden mit dem Handfarbmessgerät auszumessende Lichtquellen jeglicher Art verstanden, insbesondere Monitore, von einem Projektor angestrahlte Projektionsflächen und Umgebungslicht.

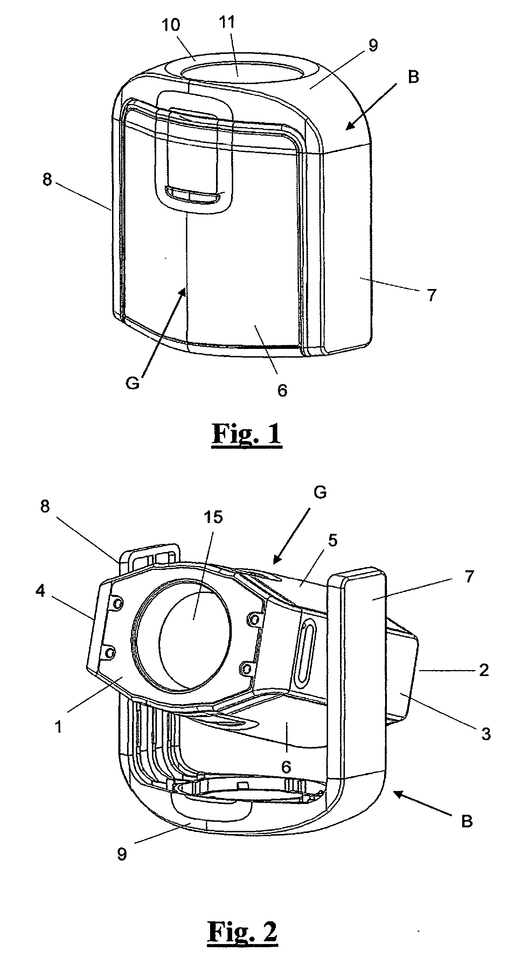

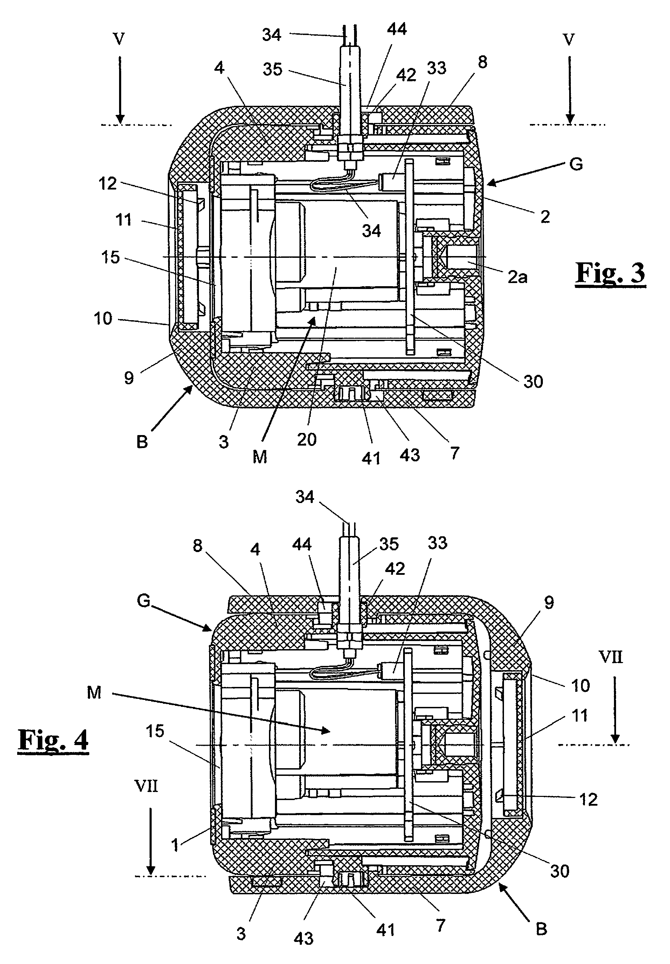

Die äussere Gestalt des erfindungsgemässen Handfarbmessgeräts ist am besten aus den Figuren 1 und 2 erkennbar. Das Gerät umfasst ein als Ganzes mit G bezeichnetes Gehäuse und einen als Ganzes mit B bezeichneten, im Wesentlichen U-förmigen Bügel, der am Gehäuse in noch zu beschreibender Weise beweglich gelagert ist. Das Gehäuse G umfasst eine im Wesentlichen ebene Vorderwand 1, eine zu dieser parallele und ebenfalls im Wesentlichen ebene Hinterwand 2 (Fig. 3), eine im Wesentlichen ebene untere Wand 3, eine dazu parallele, ebenfalls im Wesentlichen ebene obere Wand 4 (Fig. 3) und zwei etwas nach aussen gekrümmte Seitenwände 5 und 6.

Die Hinterwand 2 des Gehäuses G ist als Standfläche ausgebildet und mit einem hier durch eine Gewindebuchse 2a gebildeten Verbindungsteil für ein Stativ versehen (Fig. 3). Dadurch lässt sich das Handfarbmessgerät wie in Fig. 1 gezeigt aufstellen oder an einem Stativ anbringen.

Der Bügel B umfasst zwei parallele Seitenarme 7 und 8 und einen diese verbindenden, nach aussen abgerundeten Mittelteil 9. Im Mittelteil 9 des Bügels B ist ein Fenster 10 vorgesehen, in welches ein optischer Diffusor 11 eingesetzt und an seinem Rand mittels hinterschnittenen Rastnoppen 12 gehaltert ist (Figuren 3 und 4).

Der Mittelteil 9 des Bügels B ist als Standfläche ausgebildet, so dass der Bügel B gewissermassen als integrierter Gerätestandfuss für das Handfarbmessgerät dienen kann, an welchem das Gehäuse G (in einer vertikalen Ebene) schwenkbar gelagert ist. Darauf wird weiter unten noch näher eingegangen.

Der Seitenarm 7 des Bügels B ist aussen im Wesentlichen eben ausgebildet und dient als (weiterer) Standfuss für das Handmessgerät. Der Seitenarm 7 kann alternativ oder zusätzlich analog zur Hinterwand 2 des Gehäuses G auch mit einem (in der Zeichnung nicht dargestellten) Verbindungsteil, insbesondere einer Gewindebuchse für ein Stativ ausgestattet sein.

Im Gehäuse G ist eine als Ganze mit M bezeichnete opto-elektronische Messeinheit untergebracht (Figuren 3 und 4). In der Vorderwand 1 des Gehäuses G ist ein Messfenster 15 vorgesehen, durch welches Messlicht in die Messeinheit M eintreten kann. Die opto-elektronische Messeinheit empfängt von einem Messobjekt ausgehendes Messlicht, wandelt dieses in entsprechende elektrische Messsignale um, verarbeitet diese Messsignale zu die Farbe des Messobjekts charakterisierenden digitalen Messdaten und stellt diese Messdaten über eine Kommunikationsschnittstelle zur Verfügung. Die Messeinheit M umfasst einen Tubus 20 mit diversen optischen Komponenten sowie eine Printplatte 30, auf der photoelektrische Sensoren angeordnet sind, die über die optischen Komponenten mit Messlicht beaufschlagt werden und dieses in entsprechende elektrische Messsignale umwandeln. Eine mit den Sensoren zusammenarbeitende Messelektronik auf der Printplatte steuert die Sensoren an und stellt deren Messsignale in digitalisierter Form an einer Kommunikationsschnittstelle 33 zur Verfügung.

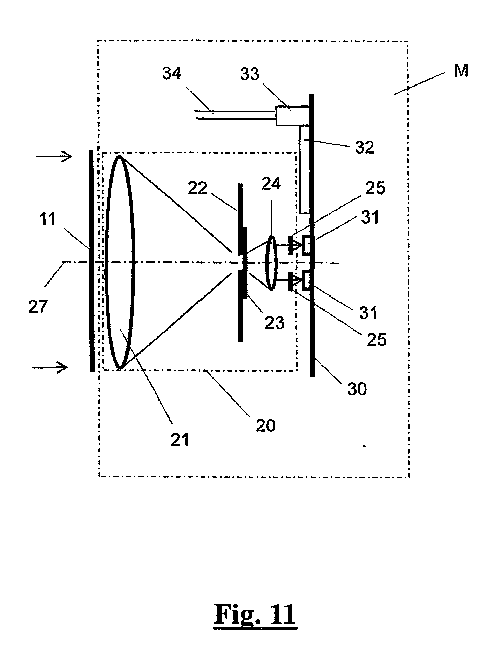

In Fig. 11 ist eine besonders vorteilhafte Ausführungsform der opto-elektronischen Messeinheit M schematisch dargestellt.

Der Tubus 20 enthält eine Eingangslinse 21, eine Blende 22, einen Diffusor 23 und eine Sensor-Linse 24. Ferner umfasst die Messeinheit M Farbfilter 25 und auf der Printplatte 30 photoelektrische Sensoren 31 und eine digitale Messelektronik 32, die ihrerseits die genannte Kommunikationsschnittstelle 33 umfasst.

Die Blende 22 befindet sich in der Brennebene der Eingangslinse 21 und begrenzt den Einfallswinkelbereich auf typisch etwa +/- 4-6°. Der Diffusor 23 ist unmittelbar an der Blende 22 angeordnet und depolarisiert das Messlicht. Der Diffusor 23 ist in der Brennebene der Sensor-Linse 24 angeordnet. Das vom Diffusor 23 als Sekundärlichtquelle ausgehende Licht wird von der Sensor-Linse 24 nach Unendlich abgebildet, so dass es die Farbfilter 25 und danach die diesen zugeordneten Sensoren 31 im Wesentlichen senkrecht beaufschlagt. Die Farbfilter 25 und die Sensoren 31 sind nahe bei der optischen Achse 27 des Messstrahlengangs rings um diese angeordnet. Es sind insgesamt vier Sensoren 31 vorhanden, von denen drei durch drei Farbfilter auf unterschiedliche Spektralbereiche sensibilisiert sind. Der vierte Sensor empfängt ungefiltertes Licht. Die spektralen Charakteristiken der Farbfilter 25, der Sensoren 31 und des Diffusors 23 sowie der beiden Linsen 21 und 24 sind so ausgelegt bzw. auf einander abgestimmt, dass die von den Sensoren 31 erzeugten Messsignale direkt den Tristimulus-Farbwerten XYZ oder einer Linearkombination derselben entsprechen.

Die Ansteuerung der Sensoren 31 durch die elektronische Messeinheit 32 und die Bereitstellung der digitalen Messdaten an der Kommunikationsschnittstelle 33 erfolgt an sich konventionell (z.B. wie in der eingangs erwähnten US-PS Nr. 7 671 991 beschrieben) und bedarf deshalb keiner detaillierteren Erläuterung.

Über die Kommunikationsschnittstelle 33 können die digitalisierten Messdaten in an sich bekannter Weise einem externen Gerät, insbesondere einem externen Rechner zur Verarbeitung bzw. Auswertung zugeführt werden. Dazu ist an die Kommunikationsschnittstelle 33 ein Kabel 34 angeschlossen und durch die obere Wand 4 des Gehäuses G nach aussen geführt (Figuren 3 und 4). Die Kommunikationsschnittstelle 33 kann z.B. als sog. USB-Schnittstelle ausgebildet sein und in an sich bekannter Weise gleichzeitig auch zur Stromversorgung des Handfarbmessgeräts dienen.

Die opto-elektronische Messeinheit M kann selbstverständlich auch anders aufgebaut sein, z.B. etwa so wie in der eingangs erwähnten US-PS Nr. 7 671 991 beschrieben.

Der Bügel B ist mit seinen parallelen Seitenarmen 7 und 8 an der unteren Wand 3 und an der oberen Wand 4 des Gehäuses G drehbar angelenkt und kann rund um das Gehäuse G geschwenkt werden. Dabei sind zwei Schwenkpositionen ausgezeichnet: In einer im Folgenden als Umgebungslichtposition bezeichneten Schwenkposition befindet sich der Mittelteil 9 des Bügels B mittig an der Vorderwand 1 des Gehäuses G, so dass der Diffusor 11 genau vor dem Messfenster 15 des Gehäuses G positioniert ist. Die Umgebungslichtposition des Bügels B ist in Fig. 3 zu sehen. In Fig. 11 ist der Diffusor 11 ebenfalls vor dem Messfenster bzw. der dahinter liegenden Eingangslinse 21 positioniert dargestellt. Die im Folgenden als Monitorposition bezeichnete Schwenkposition des Bügels B befindet sich bezüglich des Gehäuses G diametral gegenüber der Umgebungslichtposition. Zwischen der Umgebungslichtposition und der Monitorposition liegt eine Schwenkbewegung des Bügels um 180°. In der Monitorposition des Bügels befindet sich der den Diffusor 11 enthaltende Mittelteil 9 mittig an der Hinterwand 2 des Gehäuses G.

Durch die drehbare Lagerung des Bügels B am Gehäuse G kann also der Bügel B von der Monitorposition in die Umgebungslichtposition und von der Umgebungslichtposition zurück in die Monitorposition geschwenkt werden, wobei die Verschwenkung im gezeigten Ausführungsbeispiel in beiden Richtungen möglich ist. In der Monitorposition und in der Umgebungslichtposition sorgen noch zu erläuternde Haltemittel dafür, dass der Bügel B in der jeweiligen Position (lösbar) festgehalten wird.

Damit sich der Bügel B zwischen seiner Monitorposition und seiner Umgebungslichtposition, in denen er ja durch die beschriebenen Haltemittel festgelegt ist, nicht unkontrolliert bewegt, ist das Handfarbmessgerät mit Bremsmitteln ausgestattet, die der Schwenkbewegung des Bügels einen definierten Schwenkwiderstand entgegensetzen. Diese Bremsmittel bestehen im Wesentlichen in einer speziellen Ausbildung der Lagerhülse 41 für den unteren Seitenarm 7 des Bügels B. Die Lagerhülse 41 ist achsparallel geschlitzt ausgebildet, so dass sie eine kreisförmige Anordnung von Zähnen 41a aufweist. Die Zähne 41a drücken elastisch nach aussen gegen die Innenwand der Lageröffnung 43 und bilden somit eine Art Bremsbacken, die die Schwenkbewegung des Bügels etwas bremst. Analoge Bremsmittel könnten natürlich auch an der oberen Seite des Handfarbmessgeräts vorgesehen sein.

Der Bügel B mit dem in seinem Mittelteil 9 angeordneten Diffusor 11 dient zur Umschaltung des Handfarbmessgeräts zwischen verschiedenen Messfunktionen. Mit dem Bügel B in Monitorposition wird das Handfarbmessgerät für Messungen an Monitoren eingesetzt, das Messlicht gelangt dabei durch das Messfenster 15 unverändert direkt in die opto-elektronische Messeinheit M. In der Umgebungslichtposition des Bügels B befindet sich der Diffusor 11 vor dem Messfenster 15. In dieser Position wird das Handfarbmessgerät für Umgebungslichtmessungen eingesetzt.

In der Monitorpostion des Bügels B könnte das Handfarbmessgerät prinzipiell auch für Messungen an z.B. von einem Projektor angestrahlten Projektionsflächen eingesetzt werden. Viel praktischer und deshalb vorteilhafter ist es jedoch, zu diesem Zweck das Handmessgerät so aufzustellen, wie es in Fig. 2 gezeigt ist. Hierbei dient der Bügel B als integrierter Gerätestandfuss, an dem das Gehäuse G in einer vertikalen Ebene schwenkbar gelagert ist, um das Eingangsfenster bzw. die Messeinheit M auf die auszumessende Projektionsfläche auszurichten. Die Bügelstellung relativ zum Gehäuse G liegt dabei zwischen der Monitorposition und der Umgebungslichtposition. Durch die schon genannten Bremsmittel wird dafür gesorgt, dass sich die relative Schwenkstellung zwischen Bügel B und Gehäuse G nicht unbeabsichtigt verändert. Wesentlich ist dabei auch, dass sich der Schwerpunkt des Gehäuses G möglichst in der Nähe der Schwenkachse des Bügels B befindet, so dass die gewichtsbedingten Drehmomente möglichst klein sind und dementsprechend die Bremskraft der Bremsmittel nicht allzu gross ausgelegt sein muss.

Um Fehlmanipulationen des Handfarbmessgeräts zu vermeiden, kann vorteilhafterweise ein Positionssensor vorgesehen sein, welcher zumindest die Umgebungslichtposition des Bügels erfasst. Ein solcher Positionssensor kann vorteilhafterweise durch einen im Gehäuse nahe von dessen oberen oder unteren Wand angeordneten Hall-Sensor gebildet sein, der mit einem in einem der Seitenarme des Bügels eingelassenen Magneten zusammenarbeitet. Die externe Steuerung des Handfarbmessgeräts kann den Positionssensor auswerten und z.B. nicht zur Bügelposition passende Messfunktionen blockieren.

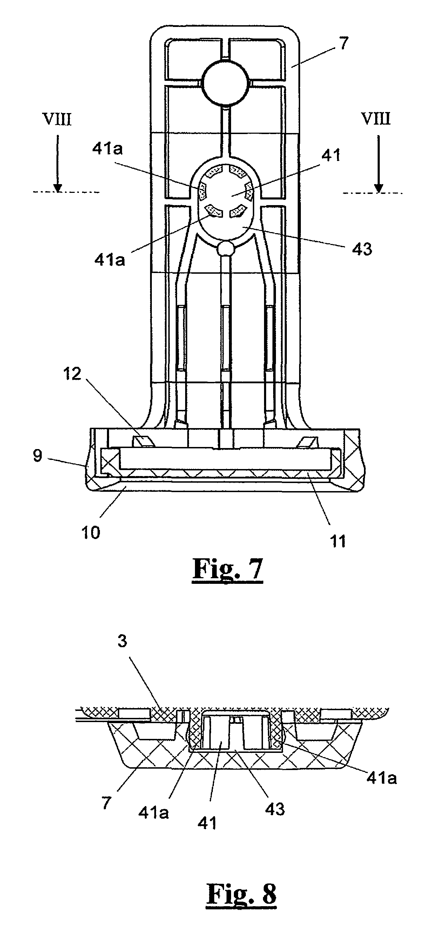

Aus weiter unten noch näher erläuterten Gründen ist der Bügel B gemäss einem weiteren wichtigen Aspekt der Erfindung nicht nur verschwenkbar am Gehäuse G gelagert, sondern ist zusätzlich auch noch in einem gewissen Masse in Richtung senkrecht zur Vorderwand 1 bzw. Hinterwand 2 des Gehäuses translatorisch bewegbar. Damit diese translatorische Bewegung des Bügels B überhaupt möglich ist, ist die Schwenklagerung des Bügels B speziell ausgebildet. An der unteren Wand 3 und der oberen Wand 4 des Gehäuses G ist je eine feststehende Lagerhülse 41 bzw. 42 ausgebildet bzw. angeformt, um welche sich die beiden Seitenarme 7 und 8 des Bügels B drehen können. An den Innenseiten der beiden Seitenarme 7 und 8 ist je eine längliche Lageröffnung 43 bzw. 44 vorgesehen, in welche je eine der beiden Lagerhülsen eingreift (Figuren 3 und 4). Die Breite der Lageröffnungen 43 und 44 entspricht im Wesentlichen dem äusseren Durchmesser der Lagerhülsen 41 und 42, die in Längsrichtung der Seitenarme 7 und 8 gemessene Länge der beiden Lageröffnungen ist etwas grösser. Die Gestalt der Lageröffnungen lässt sich am besten Fig. 7 erkennen, in der der Seitenarm 7 mit der Lageröffnung 43 von innen gesehen dargestellt ist. Die Lageröffnung 43 im Seitenarm 7 ist ein Sackloch, während die Lageröffnung 44 im Seitenarm 8 nach beiden Seiten hin offen, also durchgehend ist. Wie man leicht erkennt, bestimmt die Differenz zwischen der Länge und der Breite der Lageröffnungen 43 und 44 den maximalen translatorischen Bewegungsspielraum des Bügels B.

Durch die Lagerhülse 42 in der oberen Wand 4 des Gehäuses G und die Lageröffnung 44 im Seitenarm 8 des Bügels B erstreckt sich eine Kabeltülle 35, welche in der oberen Wand 4 des Gehäuses G befestigt ist. Das Kabel 34 ist durch die Kabeltülle 35 hindurch nach aussen geführt und wird durch die Kabeltülle 35 gleichzeitig auch zugentlastet. Die Kabeltülle 35 befindet sich somit im Bereich der Schwenkachse des Bügels B.

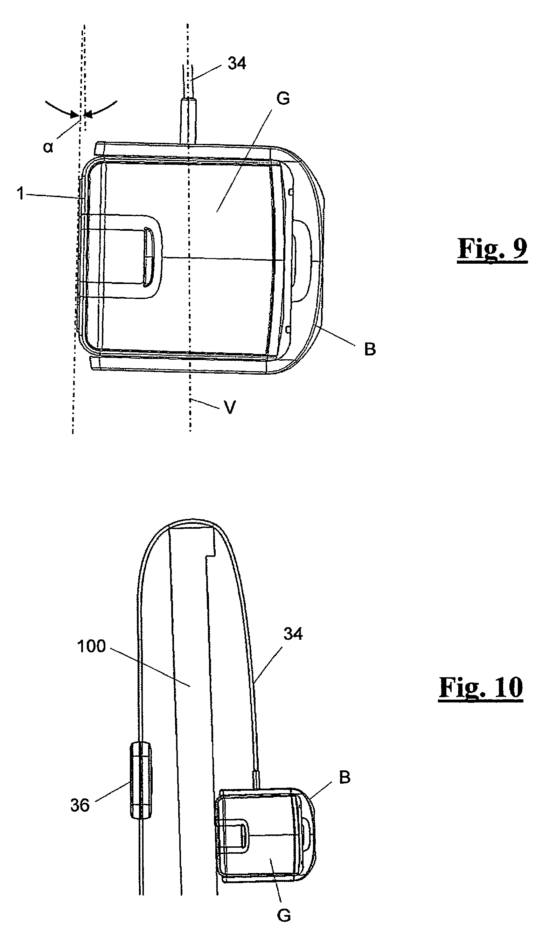

Für Messungen an Monitoren ist es üblich, das Handfarbmessgerät mittels geeigneter Haltevorrichtungen am Monitor so anzubringen, dass sich sein Messfenster unmittelbar an der Monitorleuchtfläche befindet. Beim erfindungsgemässen Handfarbmessgerät ist dies besonders einfach dadurch möglich, dass es mit seinem Kabel 34 am Monitor aufgehängt wird. Wie Fig. 10 zeigt, wird dazu das Kabel 34 über den oberen Rand des Monitors 100 gelegt, so dass das Handmessgerät an der interessierenden Messstelle der Monitorleuchtfläche hängt. Der an der Rückseite des Monitors 100 herabhängende Kabelabschnitt ist mit einem Gewichtskörper 36 versehen, der ein Gegengewicht für das Gehäuse G und die in ihm und an ihm befindlichen Komponenten bildet. Dadurch bleibt das Gehäuse ortsstabil. Zur Anpassung an verschiedene Monitorgrössen ist dabei der Gewichtskörper 36 längsverstellbar am Kabel 34 befestigt. Der Gewichtskörper 36 kann dazu zum Beispiel mit einer manuell lösbaren Klemme ausgestattet sein.

Wie schon erwähnt, soll das Handmessgerät bei der Messung an einem Monitor mit seiner die Messöffnung 15 aufweisenden Vorderwand 1 flach auf der Monitorleuchtfläche aufliegen. Damit dies (in gewissen Grenzen) unabhängig von der Neigung des Monitors bzw. der Monitorleuchtfläche möglich ist, ist das Gehäuse des Handfarbmessgeräts zusammen mit den in ihm enthaltenen und an ihm befestigten Komponenten gemäss einem weiteren wichtigen Aspekt der Erfindung gewichtsmässig speziell ausbalanciert. Diese Ausbalancierung ist so gewählt, dass, wenn das Farbmessgerät frei am Kabel 34 aufgehängt ist und sich der Bügel B in seiner Monitorposition befindet, die Vorderwand 1 des Gehäuses G in Richtung auf das Kabel 34 zu um einen Neigungswinkel α zur Vertikalen V geneigt ist, so wie dies in Fig. 9 dargestellt ist. Durch diese Rückwärtsneigung der Vorderwand 1 nach oben zum Kabel 34 hin liegt die Vorderwand 1 auch dann noch bündig an der Monitorleuchtfläche an, wenn diese leicht überhängend geneigt ist. Der Neigungswinkel α beträgt maximal etwa 10°, vorzugsweise etwa 1°-2° und speziell etwa 1.4°.

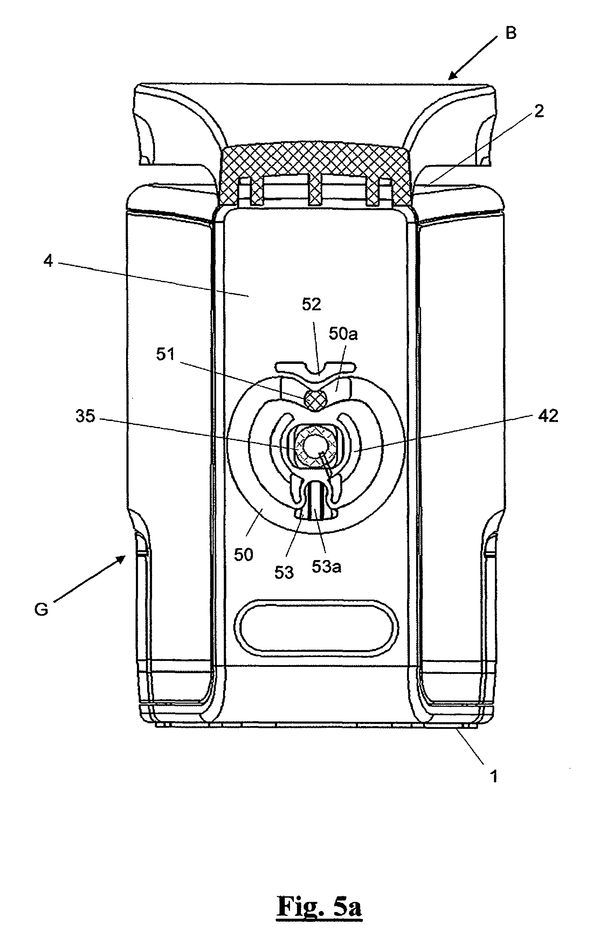

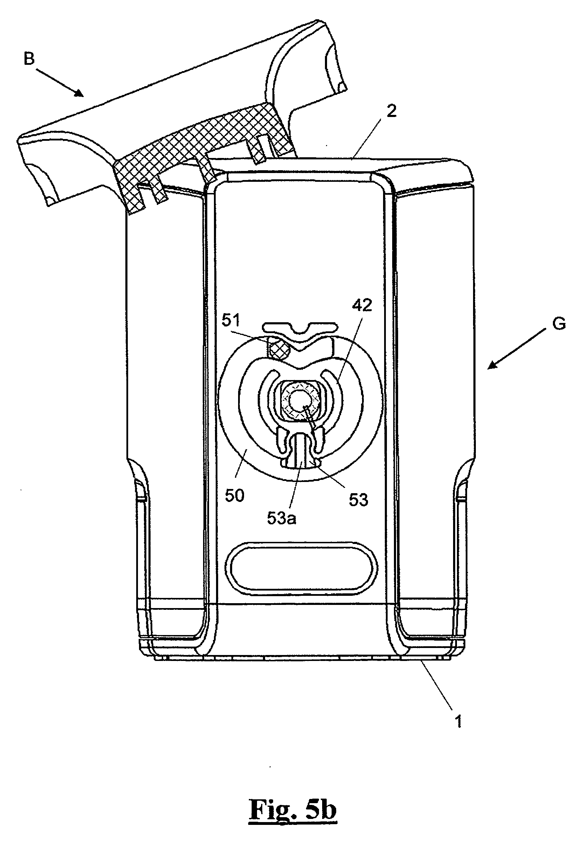

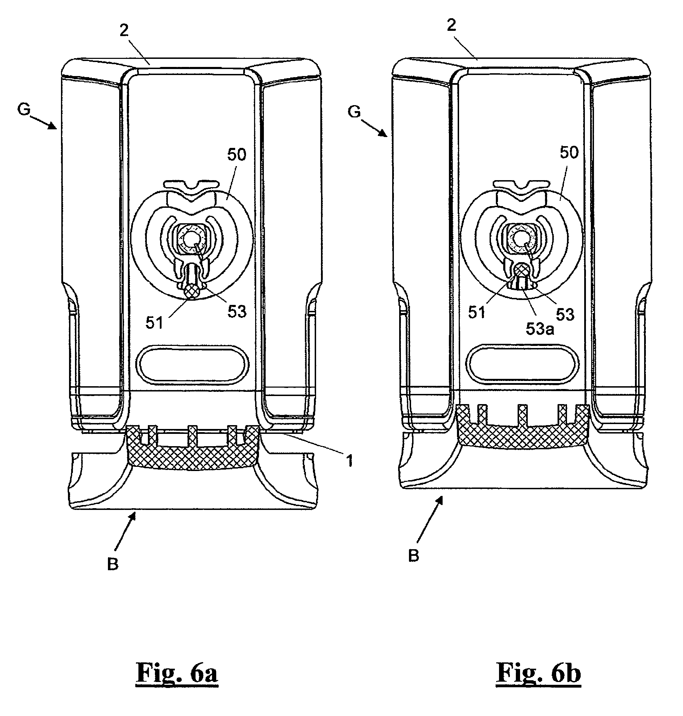

Zur Erzielung einer kompakten Bauform und einer gefälligen äusseren Form des Handfarbmessgeräts ist es wichtig, dass sich der Mittelteil 9 des Bügels B sowohl in der Monitorposition als auch in der Umgebungslichtposition des Bügels möglichst nahe an der Hinterwand 2 bzw. der Vorderwand 1 des Gehäuses G befindet, vorzugsweise unmittelbar an der Hinterwand bzw. der Vorderwand anliegt. Um dies zu erreichen, ist der Bügel B, wie schon erwähnt, nicht nur verschwenkbar am Gehäuse G gelagert, sondern ist zusätzlich auch noch in einem gewissen Masse in Richtung senkrecht zur Vorderwand 1 bzw. Hinterwand 2 des Gehäuses translatorisch bewegbar. Bezogen auf die Monitorposition und die Umgebungslichtposition des Bügels B verläuft die translatorische Bewegung parallel zur Längserstreckung der beiden Seitenarme 7 und 8 des Bügels B. Die Schwenkbewegung und die translatorische Bewegung des Bügels werden nachstehend anhand der Figuren 5a, 5b, 6a und 6b erläutert.

In Fig. 5a befindet sich der Bügel B in seiner Monitorposition. Fig. 5b zeigt, wie der Bügel B aus seiner Monitorposition heraus (in Richtung Umgebungslichtposition) verschwenkt wird. Man erkennt, dass der Mittelteil 9 des Bügels dabei gleichzeitig etwas von der Hinterwand 2 des Gehäuses weg bewegt wird. Erreicht wird dies durch eine spezielle Kulissenführung, auf die weiter unten noch eingegangen wird. Bei der Weiterschwenkung des Bügels B um 180° gelangt dieser in eine Schwenkposition, in der sich sein Mittelteil 9 im Abstand vor der Vorderwand 1 des Gehäuses befindet, so wie dies in Fig. 6a dargestellt ist. Aus dieser Schwenkposition heraus wird nun der Bügel B translatorisch auf die Vorderwand zu bewegt, bis der Mittelteil 9 an der Vorderwand 1 anliegt. Diese in Fig. 6b dargestellte Position des Bügels ist dann die Umgebungslichtposition.

Zur Zurückbewegung des Bügels B in seine Monitorposition wird der Bügel zunächst translatorisch von der Vorderwand weggezogen, bis er die in Fig. 6a gezeigte Position erreicht hat. Dann wird der Bügel (in die eine oder die andere Richtung) verschwenkt. Etwas bevor der Bügel seine Monitorposition erreicht, wird er soweit über die Hinterwand hinaus bewegt, dass er bei der weiteren Verschwenkung an der Gehäusekante zwischen der Hinterwand 2 und der einen bzw. der anderen Seitenwand 5 bzw. 6 des Gehäuses G nicht hängen bleibt (Fig. 5b). Bei der Weiterschwenkung in die Monitorposition wird der Bügel mittels der speziellen Kulissenführung wieder der Hinterwand 2 angenähert (Fig. 5a).

Die genannte Kulissenführung umfasst an den Aussenseiten der unteren Wand 3 und der oberen Wand 4 des Gehäuses G je eine Führungskulisse 50 und an den Innenseiten der beiden Seitenarme 7 und 8 des Bügels B angeordnete bzw. angeformte zapfenförmige Kulissenfolgeglieder 51, welche jeweils in die Führungskulissen 50 eingreifen. Beim Verschwenken des Bügels B bewegen sich die Kulissenfolgeglieder 51 in den Führungskulissen 50 entlang derselben und bewirken dadurch eine entsprechende Bewegung des Bügels B.

Die Führungskulissen 50 verlaufen über den grössten Teil annähernd kreisförmig. An den der Hinterwand 2 des Gehäuses G zugewandten Seiten haben die Führungskulissen 50 jedoch eine von der Hinterwand 2 wegspringende Einbuchtung 50a, so dass sich annähernd eine herz- bzw. kirschenförmige Gestalt ergibt. Die Einbuchtungen 50a bewirken, dass der Mittelteil 9 des Bügels B bei der Schwenkbewegung des Bügels in die Monitorposition an die Hinterwand 2 des Gehäuses G herangeführt wird und umgekehrt bei der Schwenkbewegung aus der Monitorposition heraus vorübergehend von der Hinterwand weg bewegt wird. Im Bereich der Einbuchtungen 50a sind die Kulissenführungen 50 etwas enger ausgestaltet und klemmen dadurch die zapfenförmigen Kulissenfolgeglieder 51 ein. Dadurch wird der Bügel B in seiner Monitorposition (lösbar) festgehalten (Fig. 5a). Die Einbuchtungen 50a bilden so zusammen mit einem etwas elastischen Stützelement 52 und den Kulissenfolgegliedern 51 Haltemittel für den Bügel B.

An den der Vorderwand 1 zugewandten Seiten ist in den Führungskulissen 50 je ein Führungselement 53 mit einer offenen Führungsnut 53a vorgesehen. Die Führungselemente 53 bzw. ihre Führungsnuten 53a erstrecken sich von den Führungskulissen 50 senkrecht zur Vorderwand 1 radial einwärts. Wenn der Bügel B in die in Fig. 6a gezeigte Schwenkposition gebracht wird, rasten die Kulissenfolgeglieder 51 ein wenig an den Führungselementen 53 ein (Fig. 6a). Wenn dann der Bügel B an die Vorderwand 1 heran in seine Umgebungslichtposition geschoben wird, gleiten die Kulissenfolgeglieder 51 in die Führungsnuten 53a hinein und spreizen diese ein wenig (Fig. 6b). Dadurch wird der Bügel B (lösbar) in seiner Umgebungslichtposition eingerastet. Die Führungselemente 53 bilden also zusammen mit den Kulissenfolgegliedern 51 ebenfalls Haltemittel für den Bügel B.

## Patentansprüche

1. Handfarbmessgerät mit einem Gehäuse, in dem sich eine opto-elektronische Messeinheit (M) befindet, welche von einem Messobjekt ausgehendes Messlicht durch ein Messfenster (15) in einer Vorderwand (1) des Gehäuses (G) empfängt, in entsprechende elektrische Messsignale umwandelt, diese Messsignale zu die Farbe des Messobjekts charakterisierenden digitalen Messdaten verarbeitet und über eine Kommunikationsschnittstelle (33) zur Verfügung stellt, **dadurch gekennzeichnet, dass** am Gehäuse (G) ein im Wesentlichen U-förmiger Bügel (B) mit zwei im Wesentlichen parallelen Seitenarmen (7, 8) und einem diese verbindenden und mit einem optischen Diffusor (11) versehenen Mittelteil (9) angeordnet ist, wobei die beiden Seitenarme (7, 8) an gegenüberliegenden Wänden (3, 4) des Gehäuses so drehbar gelagert sind, dass der Bügel (B) von einer Monitorposition um im Wesentlichen 180° in eine Umgebungslichtposition und weiter oder zurück in die Monitorposition schwenkbar ist, wobei in der Umgebungslichtposition des Bügels (B) der in dessen Mittelteil (9) angeordnete Diffusor (11) vor dem Messfenster (15) in der Vorderwand (1) des Gehäuses (G) liegt und in der Monitorposition des Bügels (B) sich der Diffusor (11) an einer der Vorderwand (1) gegenüberliegenden Hinterwand (2) des Gehäuses (G) befindet, und dass am Gehäuse (G) und an den beiden Seitenarmen (7, 8) des Bügels (B) mit einander zusammenwirkende Haltemittel (50a, 51, 53) vorgesehen sind, welche den Bügel (B) in seiner Monitorposition bzw. seiner Umgebungslichtposition lösbar festhalten.

2. Handfarbmessgerät nach Anspruch 1, **dadurch gekennzeichnet, dass** am Gehäuse (G) und zumindest an einem Seitenarm (7) des Bügels (B) mit einander zusammenwirkende Bremsmittel (41a, 43) vorgesehen sind, welche der Schwenkbewegung des Bügels (B) relativ zum Gehäuse (G) einen definierten Schwenkwiderstand entgegensetzen.

3. Handfarbmessgerät nach einem der vorangehenden Ansprüche, **dadurch gekennzeichnet, dass** der Mittelteil (9) des Bügels (B) als Standfläche ausgebildet ist und der Bügel (B) einen integrierten Gerätestandfuss bildet, an dem das Gehäuse (G) schwenkbar gelagert ist.

4. Handfarbmessgerät nach einem der vorangehenden Ansprüche, **dadurch gekennzeichnet, dass** der Bügel (B) am Gehäuse (G) zusätzlich beschränkt parallel zur Längsrichtung seiner Seitenarme (7, 8) beweglich gelagert ist.

5. Handfarbmessgerät nach Anspruch 4, **dadurch gekennzeichnet, dass** der Bügel (B) so am Gehäuse (G) beweglich gelagert und geführt ist, dass bei der Schwenkbewegung des Bügels (B) aus seiner Monitorposition heraus sein Mittelteil (9) gleichzeitig auch vorübergehend von der Hinterwand (2) des Gehäuses (G) abgehoben wird und dass bei der Schwenkbewegung des Bügels (B) in die Monitorposition sein Mittelteil (9) gleichzeitig auch auf die Hinterwand (2) des Gehäuses (G) zu bewegt wird.

6. Handfarbmessgerät nach einem der Ansprüche 4-5, **dadurch gekennzeichnet, dass** der Bügel (B) so am Gehäuse (G) beweglich gelagert und geführt ist, dass er in einer Schwenkposition, bei der sich der in seinem Mittelteil (9) angeordnete Diffusor (11) im Abstand vor dem Messfenster (15) in der Vorderwand (1) des Gehäuses (G) befindet, in Längsrichtung seiner Seitenarme (7, 8) auf die Vorderwand (1) des Gehäuses (G) zu in die Umgebungslichtposition bewegbar ist und dann in der Umgebungslichtposition durch die Haltemittel (53) festgehalten wird, und dass der Bügel (B) entgegen der Festhaltekraft der Haltemittel (53) aus seiner Umgebungslichtposition heraus in Längsrichtung seiner beiden Seitenarme (7, 8) von der Vorderwand (1) des Gehäuses (G) weg bewegbar ist.

7. Handfarbmessgerät nach einem der vorangehenden Ansprüche, **dadurch gekennzeichnet, dass** am Gehäuse (G) Führungskulissen (50) und an den Seitenarmen (7, 8) des Bügels (B) in die Führungskulissen (50) eingreifende Kulissenfolgeglieder (51) vorgesehen sind.

8. Handfarbmessgerät nach einem der vorangehenden Ansprüche, **dadurch gekennzeichnet, dass** es ein an die Kommunikationsschnittstelle (33) angeschlossenes Kabel (34) aufweist, das durch die obere Wand (4) des Gehäuses (G) und durch einen der beiden Seitenarme (8) des Bügels (B) im Wesentlichen im Bereich von dessen Schwenkachse aus dem Gehäuse herausgeführt ist.

9. Handfarbmessgerät nach Anspruch 8, **dadurch gekennzeichnet, dass** es gewichtsmässig so ausbalanciert ist, dass, wenn das Farbmessgerät frei am Kabel (34) aufgehängt ist und sich der Bügel (B) in seiner Monitorposition befindet, die Vorderwand (1) des Gehäuses (G) in Richtung auf das Kabel (34) zu um einen Neigungswinkel (α) zur Vertikalen (V) geneigt ist.

10. Handfarbmessgerät nach Anspruch 9, **dadurch gekennzeichnet, dass** der Neigungswinkel (α) max. etwa 10°, vorzugsweise etwa 1 °-2° und speziell etwa 1.4° beträgt.

11. Handfarbmessgerät nach einem der Ansprüche 8-10, **dadurch gekennzeichnet, dass** das Kabel (34) mit einem in Längsrichtung verstellbar auf ihm gelagerten Gewichtskörper (36) versehen ist.

12. Handfarbmessgerät nach einem der vorangehenden Ansprüche, **dadurch gekennzeichnet, dass** die Hinterwand (2) des Gehäuses (G) als Standfläche ausgebildet ist und/oder einen Verbindungsteil, insbesondere eine Gewindebuchse (2a) für ein Stativ aufweist.

13. Handfarbmessgerät nach einem der vorangehenden Ansprüche, **dadurch gekennzeichnet, dass** einer der beiden Seitenarme (7, 8) des Bügels (B) als Standfuss ausgebildet ist und/oder einen Verbindungsteil, insbesondere eine Gewindebuchse für ein Stativ aufweist.

14. Handfarbmessgerät nach einem der vorangehenden Ansprüche, **dadurch gekennzeichnet, dass** die eine optische Achse (27) aufweisende opto-elektronische Messeinheit (M) aus einer im Bereich des Messfensters (15) angeordneten konvexen Eingangslinse (21) mit einem verhältnismässig grossen Durchmesser, einer Blende (22) zur Begrenzung des Einfallswinkelbereichs auf +/- 2°-10°, einem depolarisierend wirkenden optischen Diffusor (23), einer Sensor-Linse (24) und mindestens drei durch Farbfilter (25) auf unterschiedliche Spektralbereiche sensibilisierten photoelektrischen Sensoren (31) besteht, wobei die Blende (22) im Wesentlichen in der Brennebene der Eingangslinse (21) liegt, der optische Diffusor (23) im Strahlengang in unmittelbarer Nähe der Blende (22) und im Wesentlichen in der Brennebene der Sensor-Linse (24) angeordnet ist, wobei die Filter (25) und die Sensoren (31) nahe der optischen Achse (27) angeordnet sind und mit im Wesentlichen parallelem Messlicht beaufschlagt werden und wobei die Filter (25), die Sensoren (31) und der Diffusor (23) so ausgelegt sind, dass die von den Sensoren (31) erzeugten elektrischen Messsignale im Wesentlichen die Tristimulus-Farbwerte XYZ nach CIE oder eine Linearkombination dieser Tristimulus-Farbwerte XYZ darstellen.

15. Handfarbmessgerät nach Anspruch 14, **dadurch gekennzeichnet, dass** der Diffusor (23) aus einem molekular streuenden Material mit sehr kleinem Streuwinkel, insbesondere Polyoxymethylen besteht, als dünnes Plättchen mit einer Plättchendichte von 0.3-0.5 mm, insbesondere rund 0.4 mm ausgebildet ist, eine Transluzenz von mindestens 25%, vorzugsweise mindestens 50% aufweist und das ihn durchsetzende Licht zu mindestens 95%, vorzugsweise mindestens 99% depolarisiert.

## Claims

1. A hand-held colour measurement instrument with a casing in which an opto-electronic measurement unit (M) is situated which receives measurement light issuing from a measurement object through a measurement window (15) in a front wall (1) of the casing (G), converts it into corresponding electrical measurement signals, processes these measurement signals to form digital measurement data which characterize the colour of the measurement object and makes them available by way of a communication interface (33), **characterized in that** a substantially U-shaped yoke (B) with two substantially parallel lateral arms (7, 8) and a middle part (9) joining the latter and provided with an optical diffusor (11) is arranged on the casing (G), wherein the two lateral arms (7, 8) are mounted in a rotatable manner on opposite walls (3, 4) of the casing in such a way that the yoke (B) is pivotable from a monitor position by substantially 180° into an ambient light position and further or back into the monitor position, wherein in the ambient light position of the yoke (B) the diffusor (11) arranged in the middle part (9) thereof is situated in front of the measurement window (15) in the front wall (1) of the casing (G) and in the monitor position of the yoke (B) the diffusor (11) is situated on a rear wall (2) of the casing (G) opposite the front wall (1), and holding means (50a, 51, 53), which co-operate with one another and which hold the yoke (B) firmly in the monitor position or the ambient light position thereof respectively in a releasable manner, are provided on the casing (G) and on the two lateral arms (7, 8) of the yoke (B).

2. A hand-held colour measurement instrument according to claim 1, **characterized in that** braking means (41a, 43), which co-operate with one another and which offer a defined pivoting resistance to the pivoting movement of the yoke (B) relative to the casing (G), are provided on the casing (G) and at least on one lateral arm (7) of the yoke (B).

3. A hand-held colour measurement instrument according to one of the preceding claims, **characterized in that** the middle part (9) of the yoke (B) is designed in the form of a standing area, and the yoke (B) forms an integrated standing base of the instrument on which the casing (G) is mounted in a pivotable manner.

4. A hand-held colour measurement instrument according to any one of the preceding claims, **characterized in that** the yoke (B) is mounted on the casing (G) so as to be movable in a manner additionally restricted parallel to the longitudinal direction of its lateral arms (7, 8).

5. A hand-held colour measurement instrument according to claim 4, **characterized in that** the yoke (B) is mounted and guided in a movable manner on the casing (G) in such a way that during the pivoting movement of the yoke (B) out of the monitor position thereof the middle part (9) thereof is also temporarily raised at the same time from the rear wall (2) of the casing (G), and during the pivoting movement of the yoke (B) into the monitor position thereof the middle part (9) thereof is also moved at the same time to the rear wall (2) of the casing (G).

6. A hand-held colour measurement instrument according to one of claims 4 to 5, **characterized in that** the yoke (B) is mounted and guided in a movable manner on the casing (G) in such a way that, in a pivoting position in which the diffusor (11) arranged in the middle part (9) thereof is situated at a distance in front of the measurement window (15) in the front wall (1) of the casing (G), the yoke (B) is movable in the longitudinal direction of the lateral arms (7, 8) thereof towards the front wall (1) of the casing (G) into the ambient light position and is then held firmly in the ambient light position by the holding means (53), and the yoke (B) is movable against the retention force of the holding means (53) out of its ambient light position in the longitudinal direction of its two lateral arms (7, 8) away from the front wall (1) of the casing (G).

7. A hand-held colour measurement instrument according to any one of the preceding claims, **characterized in that** guide slots (50) are provided on the casing (G) and slot follower members (51) engaging in the guide slots (50) are provided on the lateral arms (7, 8) of the yoke (B).

8. A hand-held colour measurement instrument according to any one of the preceding claims, **characterized in that** it has a cable (34) which is attached to the communication interface (33) and which passes out of the casing through the upper wall (4) of the casing (G) and through one of the two lateral arms (8) of the yoke (B) substantially in the region of the pivot axis thereof.

9. A hand-held colour measurement instrument according to claim 8, **characterized in that** in terms of weight it is balanced in such a way that when the colour measurement instrument is freely suspended on the cable (34) and the yoke (B) is situated in the monitor position thereof the front wall (1) of the casing (G) is inclined by an angle of inclination (α) to the vertical (V) in the direction towards the cable (34).

10. A hand-held colour measurement instrument according to claim 9, **characterized in that** the angle of inclination (α) amounts at most to approximately 10°, preferably from approximately 1° to 2°, and in particular approximately 1.4°.

11. A hand-held colour measurement instrument according to any one of claims 8 to 10, **characterized in that** the cable (34) is provided with a weight member (36) mounted thereon so as to be displaceable in the longitudinal direction.

12. A hand-held colour measurement instrument according to any one of the preceding claims, **characterized in that** the rear wall (2) of the casing (G) is designed in the form of a standing area and/or a connecting part, in particular a threaded sleeve (2a) for a stand.

13. A hand-held colour measurement instrument according to any one of the preceding claims, **characterized in that** one of the two lateral arms (7, 8) of the yoke (B) is designed in the form of a standing area and/or a connecting part, in particular a threaded sleeve for a stand.

14. A hand-held colour measurement instrument according to any one of the preceding claims, **characterized in that** the opto-electronic measurement unit (M) having an optical axis (27) comprises a convex entry lens (21) arranged in the region of the measurement window (15) and having a comparatively large diameter, a screen (22) to limit the range of the angle of incidence to +/- 2° to 10°, an optical diffusor (23) acting in a depolarizing manner, a sensor lens (24) and at least three photoelectric sensors (31) sensitized to different spectral ranges by colour filters (25), wherein the screen (22) is situated substantially in the focal plane of the entry lens (21), the optical diffusor (23) is situated in the beam path in the immediate vicinity of the screen (22) and substantially in the focal plane of the sensor lens (24), wherein the filters (25) and the sensors (31) are arranged close to the optical axis (27) and are acted upon with substantially parallel measuring light and wherein the filters (25), the sensors (31) and the diffusor (23) are designed in such a way that the electrical measurement signals generated by the sensors (31) essentially constitute the tristimulus colour values XYZ according to the CIE or a linear combination of these tristimulus colour values XYZ.

15. A hand-held colour measurement instrument according to claim 14, **characterized in that** the diffusor (23) comprises a molecularly scattering material with a very small angle of scatter, in particular polyoxymethylene, is designed in the form of a thin plate with a plate density of from 0.3 to 0.5 mm, in particular around 0.4 mm, has a translucency of at least 25 %, preferably at least 50 %, and depolarizes the light passing through it to at least 95 %, preferably at least 99 %.

## Revendications

1. Appareil de mesure de couleur portatif avec un boîtier, dans lequel se trouve une unité de mesure optoélectronique (M) qui reçoit de la lumière provenant d'un objet de mesure par une fenêtre de mesure (15) dans une paroi frontale (1) du boîtier (G), la convertit en signaux de mesure électriques correspondants, transforme ces signaux de mesure en données de mesure numériques caractérisant la couleur de l'objet de mesure et les mets à disposition via une interface de communication, **caractérisé en ce qu'**un arceau (B) essentiellement en forme de U avec deux bras latéraux (7, 8) essentiellement parallèles et une partie centrale (9) les reliant et équipée d'un diffuseur optique (11) est disposé sur le boîtier (G), les deux bras latéraux (7, 8) étant montés libres en rotation sur des parois opposées (3, 4) du boîtier (G) de telle manière que l'arceau (B) est apte à être pivoté essentiellement de 180° d'une position moniteur à une position lumière ambiante et à retourner ou avancer jusqu'à la position moniteur, où dans la position lumière ambiante de l'arceau (B), le diffuseur (11) disposé dans sa partie centrale (9) est positionné devant la fenêtre de mesure (15) dans la paroi frontale (1) du boîtier (G) et dans la position moniteur de l'arceau (B), le diffuseur (11) se trouve au niveau d'une paroi arrière (2) du boîtier (G) opposée à la paroi frontale (1), et que des moyens de maintien (50a, 51, 53) coopérant sont prévus sur le boîtier (G) et sur les deux bras latéraux (7, 8) de l'arceau (B), lesquels maintiennent l'arceau (B) de manière détachable dans sa position moniteur ou sa position lumière ambiante.

2. Appareil de mesure de couleur portatif selon la revendication 1, **caractérisé en ce que** des moyens de freinage (41a, 43) coopérants, qui opposent une résistance déterminée au pivotement de l'arceau (B) par rapport au boîtier (G), sont disposés sur le boîtier et sur au moins un bras latéral (7) de l'arceau (B).

3. Appareil de mesure de couleur portatif selon l'une quelconque des revendications précédentes, **caractérisé en ce que** la partie centrale (9) de l'arceau (B) est configurée comme surface d'appui et que l'arceau (B) forme un pied de l'appareil intégré sur lequel l'appareil est monté pivotant.

4. Appareil de mesure de couleur portatif selon l'une quelconque des revendications précédentes, **caractérisé en ce que** l'arceau (B) est en outre monté sur le boîtier (B) de manière à être mobile, avec une restriction de mouvement, parallèlement à la direction longitudinale de ses bras latéraux (7, 8).

5. Appareil de mesure de couleur portatif selon la revendication 4, **caractérisé en ce que** l'arceau (B) est monté et guidé de manière mobile sur le boîtier (G) de telle sorte que lors du mouvement pivotant de l'arceau (B) à partir de sa position moniteur, sa partie centrale (9) est simultanément et provisoirement éloignée de la paroi arrière (2) du boîtier (G) et que lors du mouvement pivotant de l'arceau (B) vers sa position moniteur, sa partie centrale (9) est simultanément déplacée vers la paroi arrière (2) du boîtier (G).

6. Appareil de mesure de couleur portatif selon l'une des revendications 4 - 5, **caractérisé en ce que** l'arceau (B) est monté et guidé de manière mobile sur le boîtier (G) de telle sorte que dans une position de pivotement dans laquelle le diffuseur (11) disposé dans sa partie centrale (9) se trouve à distance face à la fenêtre de mesure (15) dans la paroi frontale (1) du boîtier (G), il est apte à être déplacé dans la direction longitudinale de ses bras latéraux (7, 8) vers la paroi frontale (1) du boîtier (G) en position lumière ambiante et est ensuite maintenu dans la position lumière ambiante par les moyens de maintien (53), et que l'arceau (B) est apte à être éloigné de la paroi frontale (1) du boîtier (G), à partir de la position lumière ambiante, contre la force de maintien des moyens de maintien (53), dans la direction longitudinale de ses deux bras latéraux (7, 8).

7. Appareil de mesure de couleur portatif selon l'une quelconque des revendications précédentes, **caractérisé en ce que** des coulisses de guidage (50) sont disposées sur le boîtier (G) et que des organes de suivi des coulisses (51) engagés dans les coulisses de guidage (50) sont disposés sur les bras latéraux (7, 8) de l'arceau (B).

8. Appareil de mesure de couleur portatif selon l'une quelconque des revendications précédentes, **caractérisé en ce qu'**il comporte un câble (34) connecté à l'interface de communication (33) qui sors du boîtier à travers la paroi supérieure (4) du boîtier (G) et à travers l'un des deux bras latéraux (7, 8) de l'arceau (B), essentiellement dans la région de son axe de pivotement.

9. Appareil de mesure de couleur portatif selon la revendication 8, **caractérisé en ce qu'**il est équilibré en termes de poids de telle sorte que lorsque l'appareil de mesure de couleur est librement suspendu au câble (34) et que l'arceau (B) se trouve dans sa position moniteur, la paroi frontale (1) du boîtier (G) est inclinée en direction du câble (34) d'un angle d'inclinaison (α) par rapport à la verticale (V).

10. Appareil de mesure de couleur portatif selon la revendication 9, **caractérisé en ce que** l'angle d'inclinaison (α) est de max. 10° environ, de préférence environ 1° - 2°, et spécifiquement d'environ 1,4°.

11. Appareil de mesure de couleur portatif selon l'une des revendications 8 - 10, **caractérisé en ce que** le câble (34) est équipé d'un corps de poids (36) monté sur le câble de manière ajustable dans la direction longitudinale.

12. Appareil de mesure de couleur portatif selon l'une quelconque des revendications précédentes, **caractérisé en ce que** la paroi arrière (2) du boîtier (G) est configurée comme surface d'appui et/ou comprends une pièce d'assemblage, notamment une douille filetée (2a) pour un trépied.

13. Appareil de mesure de couleur portatif selon l'une quelconque des revendications précédentes, **caractérisé en ce que** l'un des deux bras latéraux (7, 8) de l'arceau (B) est configuré comme pied et/ou comporte une pièce d'assemblage, notamment une douille filetée pour un trépied.

14. Appareil de mesure de couleur portatif selon l'une quelconque des revendications précédentes, **caractérisé en ce que** l'unité de mesure optoélectronique comportant un axe optique (27) consiste en une lentille d'entrée (21) convexe ayant un diamètre relativement grand, disposée dans la région de la fenêtre de mesure (15), un obturateur (22) pour limiter la zone d'angle d'incidence à +/- 2° - 10°, un diffuseur optique (23) agissant de manière dépolarisante, une lentille capteur (24) et au moins trois capteurs photo-électriques sensibilisés par au moins trois filtres (25) à différentes régions spectrales, où l'obturateur (22) se situe essentiellement dans le plan focal de la lentille d'entrée (21), le diffuseur optique (23) est disposé dans le chemin optique à proximité immédiate de l'obturateur (22) et essentiellement dans le plan focal de la lentille capteur (24), où les filtres (25) et les capteurs (31) sont disposés près de l'axe optique (27) et sont essentiellement soumis à une lumière de mesure parallèle, et où les filtres (25), les capteurs (31) et le diffuseur (23) sont configurés de telle sorte que les signaux de mesure électriques générés par les capteurs (31) représentent essentiellement des valeurs tristimulus XYZ selon le modèle CEI ou une combinaison linéaire de ces valeurs tristimulus XYZ.

15. Appareil de mesure de couleur portatif selon la revendication 14, **caractérisé en ce que** le diffuseur (23) consiste en un matériau diffusant au niveau moléculaire avec un angle de diffusion très petit, notamment en polyoxymethylène, est conformé comme plaquette fine avec une densité de plaquette de 0,3 - 0,5 mm, notamment autour de 0,4 mm, une translucidité d'au moins 25%, de préférence au moins 50% et qu'il dépolarise la lumière le traversant à au moins 95%, de préférence au moins 99%.
